Europäisches Patentamt

European Patent Office

Office européen des brevets

(19)

(11) **EP 0 582 196 B1**

# (12) FASCICULE DE BREVET EUROPEEN

(45) Date de publication et mention
de la délivrance du brevet:
**13.03.1996 Bulletin 1996/11**

(51) Int. Cl.⁶: **B60C 9/02**

(21) Numéro de dépôt: **93112059.6**

(22) Date de dépôt: **28.07.1993**

(54) **Ancrage de la carcasse d'un pneumatique**

Verankerung von der Karkasse eines Reifens

Anchoring of a tyre carcass

(84) Etats contractants désignés:
**AT BE CH DE ES FR GB IT LI LU NL SE**

(30) Priorité: **05.08.1992 FR 9209813**

(43) Date de publication de la demande:
**09.02.1994 Bulletin 1994/06**

(73) Titulaire: **SEDEPRO**
**F-75015 Paris (FR)**

(72) Inventeurs:
 • **Herbelleau, Yves**
   **F-63200 Riom (FR)**
 • **Pradelle, Jean-Jacques**
   **F-63000 Clermont-Ferrand (FR)**

(74) Mandataire: **Bauvir, Jacques et al**
**Michelin & Cie,**
**Service SRK Brevets**
**23, Place des Carmes**
**F-63040 Clermont-Ferrand Cédex (FR)**

(56) Documents cités:
**DE-A- 2 408 474**     **DE-A- 2 424 993**
**FR-A- 1 256 432**     **FR-A- 2 132 509**
**FR-E-  74 082**      **US-A- 1 393 952**
**US-A- 4 510 291**

## Description

La présente invention concerne les pneumatiques. Plus particulièrement elle concerne la disposition des fils de renforcement dans les flancs et dans les bourrelets ; elle concerne également l'ancrage des fils de carcasse dans le bourrelet.

Le renforcement de carcasse des pneumatiques est à l'heure actuelle constitué par une ou plusieurs nappes, le plus souvent radiales, retournées autour d'une ou de plusieurs tringles disposées dans les bourrelets. Les bourrelets constituent le moyen permettant de fixer le pneumatique sur la jante. La rigidité du bourrelet ainsi constitué est très grande.

Il est souhaitable d'assurer une évolution progressive de la rigidité du bourrelet lorsque l'on se déplace radialement vers le haut en direction du flanc. Dans la technique actuelle, il est assez difficile d'assurer une telle évolution progressive de rigidité entre le flanc, qui doit présenter une souplesse importante, et le bourrelet, qui au contraire doit présenter une importante rigidité. En effet, les renforts que l'on dispose dans cette partie du pneumatique présentent toujours inévitablement une discontinuité : à l'extrémité radialement supérieure du retournement de carcasse, on passe sans transition dans une zone dépourvue de ce retournement de carcasse, zone qui est donc inévitablement moins rigide. Pour rappel, "radialement vers le haut", ou "radialement supérieur" signifie vers les plus grands rayons, et inversement.

L'état de la technique connait déjà d'autres principes de conception d'une carcasse radiale qui permettent d'éviter les retournements autour d'une tringle. A titre d'exemple, on peut citer le brevet US-A-3 815 652, correspondant au préambule de la revendication 1, dans lequel on proposait de constituer le renforcement de carcasse à partir d'un seul fil faisant un trajet particulier d'un bourrelet à l'autre du pneumatique, de telle sorte que le même fil constitue partiellement et progressivement un renfort qui remplace la tringle classique. Dans la structure connue, le fil de carcasse forme dans les flancs des U dont la partie basse se situe dans le bourrelet, concentriquement au pneumatique. La partie basse des U s'étend dans le bourrelet sur une certaine longueur d'arc. On dispose les figures en U autant de fois qu'il est nécessaire, en les décalant les unes par rapport aux autres jusqu'à couvrir l'ensemble du flanc du pneumatique. Il en résulte une structure dans laquelle, dans les bourrelets, le fil de renforcement, vu radialement, forme des escaliers : la partie basse d'un U ne se trouve pas alignée exactement selon un cercle compris dans un plan perpendiculaire à l'axe du pneumatique. Cette structure de renforcement est préjudiciable à un positionnement précis des fils, et n'est pas de nature à conférer au pneumatique une très bonne uniformité. Or, à l'heure actuelle, le niveau de qualité exigé des pneumatiques est sans cesse plus important.

Le but de l'invention est de proposer une nouvelle façon de disposer le fil de renforcement de carcasse afin de pouvoir assurer une évolution aussi progressive que possible de la rigidité de flexion du flanc du pneumatique lorsque l'on se rapproche du bourrelet.

Un autre but de l'invention est de proposer une structure de renforcement du pneumatique qui soit aussi homogène que possible dans le sens circonférentiel.

Enfin, un autre but poursuivi par l'invention est de proposer une structure de renforcement pour pneumatique qui se prête aisément à une fabrication mécanisée.

Le pneumatique selon l'invention, comportant une carcasse ancrée de chaque côté dans un bourrelet dont la base est destinée à être montée sur un siège de jante, chaque bourrelet se prolongeant par un flanc, les flancs rejoignant la bande de roulement, la carcasse étant constituée à partir d'un fil de carcasse formant des allers et retours, le bourrelet étant renforcé par des fils orientés circonférentiellement, est caractérisé en ce que, dans le bourrelet, l'ancrage de la carcasse est assuré de la façon suivante :

- les allers et retours du fil de carcasse sont disposés de façon adjacente, sans chevauchement, et sont alignés circonférentiellement, avec une boucle reliant chaque fois un aller à un retour ;
- les allers et retours de fils forment, dans le bourrelet, un ou plusieurs alignements circonférentiels ;
- chaque alignement circonférentiel de fils est bordé, de chaque côté dans la direction axiale, par au moins une pile de fils orientés circonférentiellement, avec interposition d'une couche d'un mélange de caoutchouc ayant une dureté Shore A supérieure à 70.

Dans le présent mémoire, le terme "fil" désigne en toute généralité aussi bien des monofilaments que des multifilaments, ou des assemblages comme des câbles, des retors ou bien encore n'importe quel type d'assemblage équivalent, et ceci, quels que soit la matière et le traitement de ces fils, par exemple traitement de surface ou enrobage ou préencollage pour favoriser l'adhésion sur le caoutchouc. Le renforcement de carcasse est pris en sandwich entre deux piles de fils orientés circonférentiellement, avec interposition de caoutchouc. Une carcasse est dite radiale lorsque ses fils sont disposés à 90°, mais aussi, selon l'usage, à un angle proche de 90°.

On sait que dans la technique actuelle, la ou les nappes de carcasse sont retournées autour d'une tringle. La tringle remplit alors une fonction d'ancrage de carcasse, c'est à dire reprend la tension se développant dans les fils de carcasse sous l'effet de la pression de gonflage. L'agencement revendiqué ici assure cette fonction d'ancrage de la carcasse.

On sait aussi que, toujours dans l'état de la technique, la même tringle assure aussi une fonction de serrage du bourrelet sur sa jante. L'agencement revendiqué ici est également capable d'assurer un serrage suffisant.

Tous les détails de réalisation sont donnés dans la description qui suit, à consulter avec les figures suivantes :

La figure 1 est une coupe radiale montrant essentiellement un flanc et un bourrelet d'un pneumatique selon l'invention ;

La figure 2 est une vue en perspective, montrant seulement la disposition des fils de renforcement ;

La figure 3 est une coupe radiale montrant une deuxième variante d'exécution de l'invention ;

La figure 4 est une perspective dans laquelle on montre une partie des fils de renforcement disposés d'une façon qui correspond à la deuxième variante ;

La figure 5 montre une troisième variante de réalisation de l'invention, en coupe radiale montrant le flanc et le bourrelet du pneumatique.

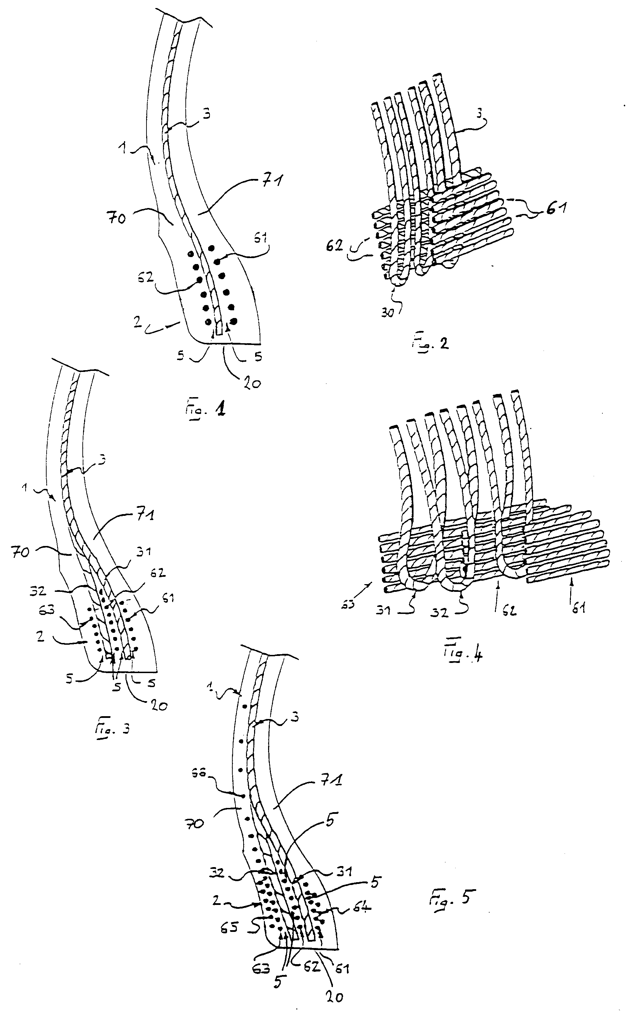

Les figures 1 et 2 illustrent la variante de réalisation la plus simple. On y voit les différentes parties bien connues d'un pneumatique, plus spécialement concernées par la présente invention, à savoir le flanc 1 et le bourrelet 2. Le renforcement de carcasse est constitué par des portions de fil 3, ici orientées radialement dans les flancs 1. Le fil 3 forme des boucles 30 juxtaposées, situées dans le bourrelet 2. Les boucles 30 sont adjacentes et ne se chevauchent pas.

En disposant le fil en boucles, on évite tous les bords coupés, qui sont autant de discontinuités. En effet, le fil de renforcement est en général un câble ; les extrémités de câble présentent, à l'endroit de la coupe, des épanouissements dans lesquels tous les monofilaments s'écartent les uns des autres. Cela constitue des amorces de rupture à l'intérieur du pneumatique. Lorsque les fils sont en matière textile, ils sont encollés afin d'assurer une très bonne adhésion au caoutchouc. Il n'y a malheureusement pas de préencollage sur chaque extrémité de câble après qu'il ait été coupé, ce qui fait que là encore le caoutchouc n'adhère pas à l'endroit de la coupe, d'où le risque d'amorces de rupture à l'intérieur du bourrelet. Avec la disposition décrite ici, ce genre d'inconvénient n'est pas à craindre.

Par la présence de boucles entre allers et retours, on voit que la carcasse est du type "mono fil". Bien entendu, la carcasse pourrait ne pas être fabriquée de façon continue à partir d'un seul fil. Selon la présente invention, il convient de n'utiliser cependant qu'un petit nombre de fils et à disposer les fins et les débuts de fil plutôt sous la bande de roulement que dans les bourrelets.

Afin d'assurer un parfait ancrage d'une carcasse, on réalise un bourrelet composite stratifié. A l'intérieur du bourrelet 2, on dispose, de part et d'autre des allers et retours de fil de carcasse 3, une pile de fils orientés circonférentiellement (piles 61 et 62), avec interposition d'une couche 5 d'un mélange de caoutchouc de dureté Shore A supérieure à 70. Dans chaque pile 61, 62, les fils sont sensiblement concentriques et superposés. On peut par exemple bobiner plusieurs tours de fil métallique laitonné.

Il n'est pas nécessaire d'ajouter un mélange de caoutchouc qui soit spécifique pour assurer l'imprégnation du fil de carcasse 3, ou des enroulements de fil formant les piles 61 ou 62, mais il faut éviter que les fils orientés circonférentiellement soient au contact direct des fils orientés radialement. Le même type de mélange assure les fonctions de calandrage et de liaison entre les portions de fil d'une même pile, et entre les différentes piles de fil, par imprégnation lors du moulage.

Les expérimentations ont révélé des résultats très intéressants en endurance en utilisant, pour les couches de caoutchouc 5 interposées, un mélange contenant un élastomère synthétique SBR utilisé seul, ou en coupage avec du polybutadiène, ledit SBR ayant une température de transition vitreuse (Tg) comprise entre -70°C et -30°C et ledit polybutadiène ayant une Tg comprise entre -40°C et -10°C, le ou lesdits élastomères synthétiques étant utilisés en proportion totalisée d'au moins 40 % du poids total d'élastomère, le solde étant constitué par du caoutchouc naturel. Les Tg considérées sont mesurées par analyse thermique différentielle. De préférence, on utilise un SBR solution. Par exemple, on utilise un mélange contenant 50 % de SBR solution ayant une Tg valant -48°C, 50 % de NR, avec addition de charges renforçantes et de résine pour obtenir la dureté Shore A souhaitée. La couche 5 peut être obtenue, dans le pneumatique vulcanisé, parce qu'on a posé du fil 3 de carcasse et/ou des fils des enroulements 61, 62 suffisamment enrobés de caoutchouc pour que, après moulage il apparaisse les couches 5 que l'on vient de décrire.

Au lieu de mélanges à base de caoutchouc tels qu'indiqués ci-dessus, on pourrait aussi utiliser des résines thermoplastiques (polyamide aliphatique, polyphénylène oxyde) ou thermodurcissables (résines formophénoliques), qui permettent d'obtenir la rigidité et le collant convenables.

Pour obtenir un bon collage d'une couche 5 de caoutchouc à la fois sur les fils métalliques laitonnés des piles 61, 62 et sur les fils textiles 3 de la carcasse, et pour garantir une bonne endurance de ce collage à haute température, ladite couche 5 de caoutchouc comporte un taux de soufre important et on emploie des additifs promoteurs d'adhésion (par exemple des sels métalliques de cobalt ou de nickel) en proportions bien ajustées. On utilise par exemple un taux de soufre compris entre 5 et 8 % du poids total d'élastomère et du cobalt en quantité de 0.2 % du poids total d'élastomère.

Afin d'assurer une excellente reprise de la tension apparaissant dans les fils de carcasse sous l'effet de la pression de gonflage, il est souhaitable que lesdites boucles soient disposées radialement à un niveau inférieur à la partie la plus basse des piles de fils adjacentes, orientées circonférentiellement.

De préférence, le fil 3 de carcasse forme des allers et retours d'un bourrelet 2 à l'autre du pneumatique en passant sous la bande de roulement ; le fil est donc continu d'un bourrelet à l'autre. Les différents moyens de renforcement de la structure du pneumatique sous la bande de roulement ne font pas partie de la présente invention. Il suffit de signaler qu'ils peuvent être constitués par toutes les méthodes de renforcement adéquates, comme par exemple des fils disposés de façon à assurer une ceinture triangulée. En outre, dans le bourrelet, on peut bien sûr disposer un mélange de caoutchouc très raide, du genre utilisé pour les bourrages sur tringle dans les pneumatiques classiques. Ce caoutchouc de bourrage est diposé d'un côté et/ou de l'autre du renforcement de carcasse.

Lorsque le pneumatique monté sur la jante pour laquelle il est conçu subit des déformations alternées, la zone de contact avec la jante, c'est à dire la partie du bourrelet située sous le crochet de jante, ne subit pratiquement aucune déformation. La partie supérieure du flanc, c'est à dire en règle générale la partie comprise entre le point de largeur maximale et l'épaule du pneumatique, fléchit assez fortement pour conférer au pneumatique la souplesse nécessaire. Le point de largeur maximale est la partie du flanc la plus large, correspondant à l'encombrement maximal du pneumatique monté sur sa jante.

Afin d'assurer une transition aussi progressive que possible entre la zone de contact avec la jante et le point de largeur maximale, au dessus de la zone de contact avec la jante, et en dessous du point de largeur maximale, les constituants en caoutchouc situés de part et d'autre de la carcasse respectent la relation suivante :

$$\frac{\sum_i E_i e_i \ (ext)}{\sum_i E_i e_i \ (int)} \geq 3$$

où $E_i$ est le module dans la direction radiale, $e_i$ l'épaisseur de chaque constituant "i" en caoutchouc respectivement à l'extérieur 70 et à l'intérieur 71 du fil de carcasse. Lorsqu'il y a plusieurs alignements de carcasse dans cette partie du pneumatique, pour l'application de cette formule, on considère seulement les constituants à l'extérieur du fil le plus extérieur, et respectivement à l'intérieur du fil le plus intérieur.

Lorsque le module de tous les constituants employés est comparable, cela signifie qu'il convient de faire passer la carcasse le plus possible du coté intérieur du flanc. On peut aussi utiliser des gommes plus molles (c'est à dire de module plus faible) du coté intérieur du flanc. Cela assure un bon compromis entre l'endurance du pneu et le confort qu'il procure.

Aux figures 3, 4 et 5, on voit que, dans chaque flanc 1, le fil 3 de carcasse forme un seul alignement circonférentiel de portions de fil radiales juxtaposées, et que, en partant d'un flanc pour rejoindre le bourrelet 2, la carcasse se divise en deux alignements circonférentiels de fils radiaux 31, 32 s'écartant axialement progressivement l'un de l'autre. Chaque alignement circonférentiel de fils radiaux 3 est bordé, comme expliqué ci-dessus, de chaque côté par une pile de fils orientés circonférentiellement avec interposition d'une couche de caoutchouc constituée comme décrit précédemment. L'alignement 31 est bordé par les piles 61 et 62, et l'alignement 32 est bordé par les piles 62 et 63. Toutes les piles de fils orientés circonférentiellement sont ici réalisées par enroulement en spirale. Il est avantageux que la pile médiane 62 remonte radialement plus haut que les piles latérales 61 et 63.

Cela aboutit à une disposition en quinconce qui apparaît très bien à la perspective de la figure 4 où l'on voit bien que les différents alignements sont séparés par une pile de fils orientés circonférentiellement.

Il pourrait bien entendu y avoir plus de deux alignements circonférentiels de fils radiaux s'écartant axialement progressivement les uns des autres. Dans ce cas, chaque alignement est formé à partir d'un seul fil de carcasse faisant des allers et retours radiaux. Les portions de fil des différents alignements sont disposés de façon à ce que, dans les flancs, deux portions de fil de carcasse adjacentes sont issues d'alignements différents dans le bourrelet 2. Autrement dit, il y a entrelacement des fils de chaque alignement dans le flanc, mais pas dans le bourrelet de sorte que, là encore, les boucles 30 de chaque alignement ne se chevauchent pas.

Cette deuxième variante est tout particulièrement intéressante parce que, au niveau du flanc 1 du pneumatique, il y a un seul alignement circonférentiel de portions de fils radiales (dans une seule couche). Ceci est de nature à autoriser une très grande souplesse des flancs : la rigidité de flexion du flanc à l'écrasement d'un pneumatique pourvu d'une telle structure de renforcement reste faible, bien plus faible que lorsqu'il y a deux nappes de carcasse comme dans les confections couramment employées.

Au fur et à mesure que l'on se rapproche du bourrelet 2, les fils de carcasse 3 se répartissent en deux alignements circonférentiels qui se séparent progressivement l'un de l'autre, et l'on peut bien entendu ajuster la hauteur à laquelle on organise cette séparation en plusieurs alignements, en interposant du caoutchouc sur une hauteur choisie.

De cette façon, on élève très progressivement la rigidité de flexion. En outre, on divise par deux le nombre de portions radiales de fil dans un alignement à l'intérieur du bourrelet, par rapport au nombre de portions radiales dans le seul alignement du flanc, ce qui est très intéressant car le rayon étant plus petit à hauteur du bourrelet, il y a moins de place pour loger les fils alignés que dans le flanc. Cette répartition des fils favorise la parfaite mise en place de ceux-ci avec une bonne imprégnation de caoutchouc.

A la figure 5, on voit une troisième variante de réalisation de l'invention. A l'intérieur du bourrelet 2, on a ajouté les enroulements circonférentiels de fil 64 et 65. Il ne subsiste entre les fils que des couches minces de caoutchouc, c'est-à-dire des couches pas plus épaisses que le diamètre des fils des enroulement ou des alignements.

A la même figure, on voit qu'il existe des portions de fil 66 orientées circonférentiellement remontant radialement vers le haut dans la partie du flanc 1 située sous le point de largeur maximale. Cela permet de donner des allures différentes des formes d'équilibre naturel d'une carcasse radiale gonflée. On peut ainsi maîtriser parfaitement la forme du pneumatique lorsqu'il est gonflé sur la roue. On peut bien entendu utiliser des fils de nature différente dans les flancs et dans le bourrelet, ou à l'intérieur de ceux-ci.

De préférence, la densité des fils orientés circonférentiellement est plus faible dans le flanc 1 que dans les bourrelets 2. Il est souhaitable que la variation de densité soit progressive, de façon à assurer une transition aussi progressive que possible entre le bourrelet et le flanc du pneumatique.

On voit que la structure de renforcement proposée à carcasse radiale permet une évolution progressive des rigidités entre le flanc et le bourrelet. Cette structure propose au concepteur de pneumatique de très grandes latitudes de réglage de cette rigidité et de son évolution en jouant très simplement sur la densité des fils orientés circonférentiellement, et éventuellement sur le nombre d'alignements circonférentiels de fils radiaux dans les bourrelets, et sur la nature des fils.

La structure ainsi proposée ne présente aucune discontinuité de renforcement, ce qui est très favorable à l'endurance du pneumatique, et ce qui conduit aussi, de façon inattendue à un meilleur confort du pneumatique.

Afin de positionner les fils de renforcement de façon aussi précise que possible, il est très avantageux de confectionner le pneumatique sur un noyau rigide imposant la forme de sa cavité intérieure. On applique sur ce noyau, dans l'ordre requis par l'architecture finale, tous les constituants du pneumatique, qui sont disposés directement à leur place finale, sans subir de conformation à aucun moment de la confection. Dans ce cas, le pneumatique peut être moulé et vulcanisé comme exposé dans le brevet US 4 895 692.

## Revendications

1. Pneumatique comportant une carcasse ancrée de chaque côté du pneumatique dans un bourrelet (2) dont la base (20) est destinée à être montée sur un siège de jante, chaque bourrelet se prolongeant par un flanc (1), les flancs (1) rejoignant la bande de roulement, la carcasse (5) étant constituée à partir d'un fil (3) de carcasse formant des allers et retours, le bourrelet (2) étant renforcé par des fils orientés circonférentiellement (61, 62), caractérisé en ce que, dans le bourrelet (2), l'ancrage de la carcasse est assuré de la façon suivante :

   - les allers et retours du fil (3) de carcasse sont disposés de façon adjacente et sont alignés circonférentiellement, avec une boucle (30) reliant chaque fois un aller à un retour ;
   - les allers et retours de fil (3) forment, dans le bourrelet (2), un ou plusieurs alignements (31, 32) circonférentiels ;
   - chaque alignement circonférentiel de fils est bordé, de chaque côté dans la direction axiale, par au moins une pile de fils orientés circonférentiellement, avec interposition d'une couche (5) d'un mélange de caoutchouc ayant une dureté Shore A supérieure à 70.

2. Pneumatique selon la revendication 1, caractérisé en ce que le fil de carcasse forme des allers et retours d'un bourrelet à l'autre en passant sous la bande de roulement.

3. Pneumatique selon l'une des revendication 1 ou 2, caractérisé en ce que, dans les flancs, le fil de carcasse est orienté radialement.

4. Pneumatique selon l'une des revendications 1 à 3, caractérisé en ce que lesdites boucles sont disposées radialement à un niveau inférieur à la partie la plus basse des piles de fils adjacentes.

5. Pneumatique selon l'une des revendications 1 à 4, caractérisé en ce que, dans la portion du flanc située juste au dessus de la zone de contact avec la jante, et en dessous du point de largeur maximale, les constituants en caoutchouc situés de part et d'autre de la carcasse respectent la relation suivante :

$$\frac{\sum_i E_i e_i \ (ext)}{\sum_i E_i e_i \ (int)} \geqq 3$$

où $E_i$ est le module dans la direction radiale, $e_i$ l'épaisseur de chaque constituant "i" en caoutchouc respectivement à l'extérieur et à l'intérieur du fil de carcasse.

6. Pneumatique selon l'une des revendications 1 à 5, caractérisé en ce que la couche (5) de mélange de caoutchouc interposée est un mélange contenant un élastomère synthétique SBR dont la Tg est comprise entre -70°C et -30°C, en proportion d'au moins 40 % du poids total d'élastomère.

7. Pneumatique selon la revendication 6, caractérisé en ce que le SBR est utilisé en coupage avec du PB dont la Tg est comprise entre -40°C et -10°C, la proportion totale d'élastomère synthétique valant au moins 40 % du poids total d'élastomère.

8. Pneumatique selon la revendication 6 ou 7, caractérisé en ce que le SBR utilisé est du type solution.

**9.** Pneumatique selon l'une des revendications 6 à 8, caractérisé en ce que le taux de soufre du mélange de ladite couche (5) est compris entre 5 et 8 % du poids total d'élastomère.

**10.** Pneumatique selon l'une des revendications 1 à 5, caractérisé en ce que la couche 5 est constituée essentiellement par une résine choisie dans le groupe constitué par le polyamide aliphatique, l'oxyde de polyphenylène, et les résines formophénoliques.

**11.** Pneumatique selon l'une des revendications 1 à 10, caractérisé en ce que le bourrelet comporte des fils orientés circonférentiellement disposés en plusieurs piles sur toute sa largeur.

**12.** Pneumatique selon l'une des revendications 1 à 11, caractérisé en ce que, dans chaque flanc, le fil de carcasse forment un seul alignement circonférentiel d'allers et retours radiaux, et en partant d'un flanc pour rejoindre la base d'un bourrelet, ledit alignement se divise en au moins deux alignements (31, 32) s'écartant axialement progressivement l'un de l'autre ou les uns des autres.

**13.** Pneumatique selon la revendication 12, caractérisé en ce que chaque alignement disposé dans le bourrelet est formé à partir d'un seul fil de carcasse faisant des allers et retours, et en ce que, au niveau des flancs (1), deux portions de fil de carcasse adjacentes sont issues d'alignements différents du bourrelet.

**14.** Pneumatique selon l'une des revendications 1 à 13, caractérisé en ce qu'il comporte une pile de fil orienté circonférentiellement dans la partie du flanc (1) située sous le point de largeur maximale.

**15.** Pneumatique selon la revendication 14, caractérisé en ce que la densité de fils orientés circonférentiellement est plus faible dans le flanc (1) que dans le bourrelet (2).

**Claims**

**1.** A tyre comprising a carcass anchored on either side of the tyre in a bead (2), the base (20) of which is intended to be mounted on a rim seat, each bead being extended by a sidewall (1), the sidewalls (1) joining the tread, the carcass (5) being formed from a carcass cord (3) forming forward and return paths, the bead (2) being reinforced by circumferentially oriented cords (61, 62), characterised in that, in the bead (2), the anchoring of the carcass is ensured in the following manner:

- the forward and return paths of the carcass cord (3) are arranged adjacently and are aligned circumferentially, with a loop (30) joining a forward path to a return path each time;

- the forward and return paths of cord (3) form, in the bead (2), one or more circumferential alignments (31, 32);

- each circumferential alignment of cords is bordered, on each either in the axial direction, by at least one pile of cords oriented circumferentially, with the interposition of a layer (5) of a rubber mix having a Shore A hardness of more than 70.

**2.** A tyre according to Claim 1, characterised in that the carcass cord forms forward paths and return paths from one bead to the other, passing beneath the tread.

**3.** A tyre according to one of Claims 1 or 2, characterised in that the carcass cord is oriented radially within the sidewalls.

**4.** A tyre according to one of Claims 1 to 3, characterised in that said loops are arranged radially at a level lower than the lowest part of the adjacent piles of cords.

**5.** A tyre according to one of Claims 1 to 4, characterised in that, within the portion of the sidewall located just above the region of contact with the rim and below the point of maximum width, the rubber components located on both sides of the carcass satisfy the following relationship:

$$\frac{\sum_i E_i e_i \text{ (outside)}}{\sum_i E_i e_i \text{ (inside)}} \geqq 3$$

in which $E_i$ is the modulus in the radial direction, and $e_i$ is the thickness of each rubber component "i" on the outside and the inside, of the carcass cord, respectively.

**6.** A tyre according to one of Claims 1 to 5, characterised in that the layer (5) of interposed rubber mix is a mix containing an SBR synthetic elastomer, the Tg of which is between -70°C and -30°C, in a proportion of at least 40% of the total weight of elastomer.

**7.** A tyre according to Claim 6, characterised in that the SBR is used in a blend with PB, the Tg of which is between -40°C and -10°C, the total proportion of synthetic elastomer being equal to at least 40% of the total weight of elastomer.

**8.** A tyre according to Claim 6 or 7, characterised in that the SBR used is of the solution type.

**9.** A tyre according to one of Claims 6 to 8, characterised in that the amount of sulphur in the mix of said layer (5) is between 5 and 8% of the total weight of elastomer.

10. A tyre according to one of Claims 1 to 5, characterised in that the layer (5) is formed essentially of a resin selected from the group consisting of aliphatic polyamide, polyphenylene oxide and formophenolic resins.

11. A tyre according to one of Claims 1 to 10, characterised in that the bead comprises circumferentially oriented cords arranged in several piles across its entire width.

12. A tyre according to one of Claims 1 to 11, characterised in that, in each sidewall, the carcass cord forms a single circumferential alignment of radial forward and return paths, and starting from a sidewall and rejoining the base of a bead, said alignment is divided into at least two alignments (31, 32) moving gradually axially away from each other.

13. A tyre according to Claim 12, characterised in that each alignment arranged in the bead is formed from a single carcass cord forming forward and return paths, and in that, at the level of the sidewalls (1), two adjacent portions of carcass cord come from different alignments in the bead.

14. A tyre according to one of Claims 1 to 13, characterised in that it comprises a pile of circumferentially oriented cords in the portion of the sidewall (1) located below the point of maximum width.

15. A tyre according to Claim 14, characterised in that the density of circumferentially oriented cords is less in the sidewall (1) than in the bead (2).

**Patentansprüche**

1. Reifen mit einer Karkasse, die auf jeder Seite des Reifens in einem Wulst (2) verankert ist, dessen Unterseite (20) dazu bestimmt ist, auf einem Felgensitz angebracht zu werden, wobei jeder Wulst durch eine Seitenwand (1) verlängert ist, die Seitenwände (1) an die Lauffläche angefügt sind, die Karkasse (5) aus einem Karkassenfaden (3) gebildet ist, der Vor- und Rückgänge bildet, und der Wulst (2) durch Fäden verstärkt ist, die in Umfangsrichtung (61, 62) ausgerichtet sind, dadurch **gekennzeichnet**, daß im Wulst (2) die Verankerung der Karkasse auf die folgende Weise sichergestellt ist:

- die Vor- und Rückgänge des Karkassenfadens (3) sind nebeneinanderliegend angeordnet und sind in Umfangsrichtung ausgerichtet, wobei eine Schlaufe (30) jedesmal einen Vorgang mit einem Rückgang verbindet;

- die Vor- und Rückgänge des Fadens (3) bilden im Wulst (2) eine oder mehrere, in Umfangsrichtung ausgerichtete Reihen (31, 32); und

- jede in Umfangsrichtung ausgerichtete Reihe des Fadens ist beiderseits in axialer Richtung durch mindestens einen Stapel von Fäden begrenzt, die in Umfangsrichtung ausgerichtet sind, mit Zwischenanordnung einer Schicht (5) aus einer Gummimischung mit einer Shore-Härte A von mehr als 70.

2. Reifen nach Anspruch 1, dadurch **gekennzeichnet**, daß der Karkassenfaden die Vor- und Rückgänge von einem Wulst zum anderen dadurch bildet, daß er unter der Lauffläche hindurchläuft.

3. Reifen nach einem der Ansprüche 1 oder 2, dadurch **gekennzeichnet**, daß der Karkassenfaden in den Seitenwänden radial ausgerichtet ist.

4. Reifen nach einem der Ansprüche 1 bis 3, dadurch **gekennzeichnet**, daß die genannten Schlaufen radial auf einer Höhe angeordnet sind, die niedriger liegt als der tiefste Teil der Stapel benachbarter Fäden.

5. Reifen nach einem der Ansprüche 1 bis 4, dadurch **gekennzeichnet**, daß im Abschnitt der Reifenwand, der unmittelbar unter der Berührungszone mit der Felge angeordnet ist, und unter dem Punkt größter Breite die Gummibestandteile, die beiderseits der Karkasse angeordnet sind, die folgende Zuordnung beachten:

$$\frac{\sum_i E_i e_i \text{ (ext)}}{\sum_i E_i e_i \text{ (int)}} \geq 3$$

wobei $E_i$ das Modul in radialer Richtung ist, $e_i$ die Dicke eines jeden Bestandteils "i" aus Gummi an der Außenseite bzw. der Innenseite des Karkassenfadens.

6. Reifen nach einem der Ansprüche 1 bis 5, dadurch **gekennzeichnet**, daß die zwischengeordnete Schicht (5) aus Gummimischung eine Mischung ist, die ein synthetisches Elastomer SBR (Styrol-Butadien-Kautschuk) ist, dessen Tg (Glasübergangstemperatur) zwischen -70°C und -30°C liegt, bei einem Gesamtanteil von mindestens 40% des Elastomer-Gesamtgewichts.

7. Reifen nach Anspruch 6, dadurch **gekennzeichnet**, daß der SBR (Styrol-Butadien-Kautschuk) im Verschnitt mit PB (Polybutadien) benutzt wird, dessen Tg zwischen -40°C und -10°C liegt, wobei der Gesamtanteil des synthetischen Elastomers mindestens 40% des Elastomer-Gesamtgewichts ausmacht.

8. Reifen nach Anspruch 6 oder 7, dadurch **gekennzeichnet**, daß der benutzte SBR (Styrol-Butadien-Kautschuk) dem Lösungstyp angehört.

9. Reifen nach irgendeinem der Ansprüche 6 bis 8, dadurch **gekennzeichnet**, daß der Schwefelanteil des Gemischs der genannten Schicht (5) zwischen 5 und 8% des Elastomer-Gesamtgewichtes beträgt.

10. Reifen nach einem der Ansprüche 1 bis 5, dadurch **gekennzeichnet**, daß die Schicht 5 im wesentlichen aus einem Harz gebildet ist, das aus der Gruppe ausgewählt ist, die von aliphatischem Polyamid, Polyphenylenoxid und den Formophenolharzen gebildet ist.

11. Reifen nach einem der Ansprüche 1 bis 10, dadurch **gekennzeichnet**, daß der Wulst Fäden aufweist, die in Umfangsrichtung ausgerichtet und über seine gesamte Breite in mehreren Stapeln angeordnet sind.

12. Reifen nach einem der Ansprüche 1 bis 11, dadurch **gekennzeichnet**, daß in jeder Seitenwand der Karkassenfaden eine einzige in Umfangsausrichtung ausgerichtete Reihe der Vor- und Rückgänge bildet, und daß dann, wenn man von einer Seitenwand ausgeht, um die Unterseite eines Wulstes zu erreichen, sich die genannte Reihe auf mindestens zwei Reihen (31, 32) aufteilt, die sich axial fortlaufend die eine von der anderen abspreizt.

13. Reifen nach Anspruch 12, dadurch **gekennzeichnet**, daß jede im Wulst angeordnete Reihe aus einem einzigen Karkassenfaden gebildet ist, der Vor- und Rückgänge bildet, und daS auf Höhe der Seitenwände (1) zwei benachbarte Abschnitte des Karkassenfadens von unterschiedlichen Reihen des Wulstes ausgehen.

14. Reifen nach einem der Ansprüche 1 bis 13, dadurch **gekennzeichnet**, daß er einen Fadenstapel aufweist, der in dem Teil der Seitenwand (1) in Umfangsrichtung ausgerichtet ist, der unter dem Punkt maximaler Breite angeordnet ist.

15. Reifen nach Anspruch 14, dadurch **gekennzeichnet**, daß die Dichte der in Umfangsrichtung ausgerichteten Fäden in der Seitenwand (1) kleiner ist als im Wulst (2).

Fig. 1

Fig. 2

Fig. 3

Fig. 4

Fig. 5